# EUROPEAN PATENT APPLICATION

(11) **EP 2 849 133 A1**
(43) Date of publication of application: **18.03.2015**
(21) Application number: 13184865.7
(22) Date of filing: 17.09.2013
(51) Int. Cl.: G06Q 10/10

(54) **Method and system for workflow objects to relate tasks and entities in support of processing, visualization and analytics**

(71) Applicant: AdaPro GmbH, 67059 Ludwigshafen (DE)
(72) Inventor: Kraft, Frank Michael, 67059 Ludwigshafen (DE)
(74) Representative: Zahn, Matthias

(57) **Abstract**

In a computer-implemented method (300) for operating a computer engine (110), a logic (W/S, R/A) is set up with workflow objects (W) that represent tasks (T) to be performed outside the engine (110). The logic comprises potential states (S) for the workflow objects (W), and inter-object relations (R) between the workflow objects (W) with pre-defined potential attributes (A). Current states (*) are assigned to the workflow objects (W) according to the performance of the tasks (T). Current attributes (#) of the inter-object relations (R) are calculated according to the logic (W/S, R/A) as a function of the current states (*) of the workflow objects (W). A statement (123) is communicated to a user (125/135). A response to the statement is received from the user (115A, 115B) and the workflow objects (W) is modified according to the response (115A, 115B).

## Description

### Technical Field

The present invention generally relates to data processing, and more in particular relates to computer-implemented workflows with workflow objects.

### Background

Organizations such as enterprises, governments, universities are active, for example, in business, manufacturing, or health care. Inside the organizations, persons are engaged in performing individual tasks. The organizations manage task performance, for example, by assigning tasks to employees and by tracking the completion of tasks.

To increase efficiency, sequences of tasks (or processes) can be represented by a computer workflow, in that tasks are represented by workflow objects. In the workflow, the execution of a task can be represented by states of the workflow objects, such as an "open" state or a "completed" state. The states are useful, for example, to monitor or evaluate task performance of the persons or of the organizations as a whole. Task execution often involves interdependencies. For example, some tasks provide task results that are preconditions for other tasks, in view of starting, of continuing or completing the other tasks. However, a linear sequence would rather be the exception; modern organizations tend to be more complex with a high degree of task interdependency.

Some of the tasks can be assigned to machines (or other computers, and/or web services) so that the computer workflow can start a task to be executed without engaging a person. More in general, a task is performed by an entity that can be a human person, a machine, a computer, or the like.

Any computer workflow has to be set-up in advance, and the computer workflow is relatively static in the sense that changes to the sequences require computer experts to remodel the workflow. In other words, the computer workflow has to be set-up at design-time, but it is very difficult to change it at run-time.

Such and other constraints increase the complexity of computer workflows. Workflows are difficult to be changed. As a consequence, representing complex task interdependencies by computer workflows is no longer effective. In other words, beyond certain "borders" computer workflow tend to lose their efficiency.

### Summary

Therefore, there is a desire to improve computer-implemented workflows. Embodiments of the invention provide a system as a computer engine and a computer-implemented method for effectively modifying a running workflow.

A workflow engine receives an initial set-up of a logic that includes workflow objects (W) with potential states (S) and inter-object relations (R) with potential attributes (A). The workflow objects represent tasks (T) to be performed in the real world, and the relations represent task dependencies in the real world. The number of potential states is not limited, but the potential states can represent the task being initialized (initial state, or states), the task being performed (intermediate state, or states), and the task having been finalized (final state, or states). In an embodiment that is described herein, the relations are directed relations from a so-called source workflow object (or objects) to a so-called target workflow object. The source workflow object represents a first task (or first activity) and the target workflow object represents a second task (or second activity). Looking at the dependencies of the tasks, the second task needs the first task to be performed so that the first task is a "needed task", and the second task is the "needing task". Hence, there is a needed workflow object (first) and a needing workflow object (second).

The embodiment uses three potential attributes (A) that describe the relations, for indicating the precondition to be fulfilled (E), for indicating the precondition not to be fulfilled (NE), and for indicating a conflict (K). The three potential attributes are related to the engine, so adding a further attribute is usually not provided when the objects and the relations are being set up.

Depending on task performance, the workflow objects have current states (*). The engine calculates a current attribute (#) of the inter-object relations as a function of the logics and of the current states (*) of the workflow objects. The engine derives a statement from the current attribute (#) and communicates the statement to a user. The user can be a human user. The user can also be a client or a further engine of a different computer so that the client or the further engine to execute workflow objects automatically. Optionally, the statement can include pre-defined text portions. Optionally, current attributes (#) are determined by combining attributes according to pre-defined rules.

The engine receives a response from the user and modifies the workflow object, optionally with influence to and from the tasks that the workflow objects represent. Modifications can be modifications of the states of the workflow objects ("state modifications"). Modifications can be structural modifications such as modifications of the inter-object relations, modifications of workflows object hierarchies, or modifications of the number of workflow objects by adding or by removing workflow objects. Modifications can also be modifications of a severity level of inter-object relations.

In case of modifications, the engine repeats the calculation and communicates a new statement to the user, who can provide a new response. The (c) severity level is linked to the mentioned (a) state modifications and (b) structural modifications and to the current attribute (#) obtained in the repetition. At a so-called required level, the modifications are limited to modifications that keep the current attribute (#) to be fulfilled (E) or not fulfilled (NE). At the so-called optional level, the modifications can include the attribute that indicates a conflict (K).

Changing the level can be accomplished by user interaction, but a change from the required level to the optional level is only possible for the current attribute (#) being fulfilled (E) or not fulfilled (NE), and a change from the optional level to the required level is not possible if the current attribute (#) is at conflict (K). The severity level can influence the statement, by selectively providing the statement with different pre-defined terms, such as "the first task must yield a result, so that the precondition is fulfilled" for the required level, or "the first task should yield a result, so that the precondition is fulfilled" for the optional level. Alternative wordings are, for example "the previous task must be completed" or "the previous task should be completed". Statements can include references to further tasks that are interrupted or blocked by other tasks, for example, "as a consequence, task X might be blocked" or "...will be blocked". Statements can include references to further tasks that are performed in parallel (so-called sister tasks), for example, "continuing this task is possible while review of task X is ongoing".

The engine can receive the initial set-up of logics with workflow objects (W), potential states (S), inter-object relations (R) and potential attributes (A) through user interaction by a graphical user interface that visualizes the objects (and the tasks) and the relations by graphical elements, and that uses conventions to identify the states and attributes. In an embodiment, the graphical elements are rectangles for the objects and arrows for the inter-object relations, and the conventions include the identification of final states of source workflow objects for arrows outgoing from the source workflow objects, and the identification of initial states of target workflow objects for arrows going into the target workflow objects. Optionally, the inter-object relations can be graphically related to states that are visualized by further symbols (e.g., small squares below the rectangle). Instead of a graphical user interface, the interface can be implemented otherwise, such as an interface based on programming languages, based on lists, tables or fields.

Embodiments relate to a computer program or a computer program product. The computer program product - when loaded into a memory of a computer and being executed by at least one processor of the computer - performs the steps of the computer-implemented method.

This approach allows modifying workflow objects that are already being used in connection with tasks that are performed. As a consequence, the workflow can be modified even if workflow is being executed by the computer. The workflow is not only a process model, but is a process instance that can be modified while running. This may be advantageous in situations where tasks and task sequences are difficult to be planned in advance and for workflows that are difficult to be implemented. In other words, the workflows can be created or modified "ad hoc" when the organization is confronted with the demand for tasks, or if some tasks are no longer necessary to be performed. This is especially useful in organizations with non-standardized task performance or with partially standardized task performance, as it is frequently the case for users that are so-called "knowledge workers" in the organization.

The engine evaluates the data structure in combination with the workflow states, calculates the current attributes and derives the statement. The user can perform the task accordingly, for example, the user can stop performing a task because the statement alerts him/her of conditions that contradict the task. The user can provide a response that changes the states of the workflow objects.

The user can provide a response. According to the response, the engine can modify the workflows as mentioned above with the full spectrum of modifications. Both roles can be assigned to the same person.

For interaction with the users (knowledge workers for example), the engine is coupled to a user interface that presents the workflow objects and the relations by symbols. In interacting with the engine, the user can enter task dependencies and conditions into the engine (i.e. setting up logistics). Since the workflow objects and the relations - as well as their symbols on the interface - represent tasks and inter-task dependencies of the real world, the user can intuitively understand the meaning. Further, the user interface can present the relations as a "needs relation", an approach that comes close to real world. A user understands that certain conditions are required to start or to complete a task, and the user can add these conditions to the relations.

Once the conditions (or logics) are available to the engine, the user starts to perform the tasks (or continues to perform them), and - depending on the states and attributes - the engine allows the user to modify a state of a workflow object. In that respect, the user can adapt the workflow while being executed.

The user can have a set-up role or a task role, but the roles are only introduced for simplicity of explanation. It is also possible that one and the same person assumes both roles. For setting up the user interacts with the engine directly and through the set-up interface of the engine, and for performing tasks, the user interacts with the engine directly (other user interface, not illustrated) or indirectly through applications. The user sets up logistics (with workflow objects and relations) and anticipates information that is potentially relevant for performing the task.

The states of the workflow objects and the attributes of the relations can be used to track the overall performance of the organization, to track performance of individual tasks, or to track the performance of task combinations (or projects). For example, the overall performance could be presented to users in form of burn-down diagrams or the like. It is also possible to identify the task (or the tasks) to be performed next and to identify conflicts that prevent performing a task.

The states, relations and attributes can be considered as a programming language, or modeling language for workflows. It is also possible to present them in a user interface that is part of an application.

### Brief Description of the Drawings

FIG. 1 illustrates a block diagram of a workflow engine with workflow objects, in combination with a interface and with the real world;

FIG. 2 illustrates an overview to workflow objects and illustrates relations between the workflow objects;

FIG. 3 illustrates a flow chart diagram of a computer-implemented method;

FIG. 4 illustrates an embodiment with two workflow objects with a single inter-object relation;

FIG. 5 illustrates an embodiment with two workflow objects and combined inter-object relations;

FIG. 6 illustrates an embodiment with two workflow objects and a single inter-object relation;

FIG. 7 illustrate an embodiment with severity levels;

FIG. 8 illustrates an embodiment with two workflow objects W1 and W2 with different states and different resulting relation attributes;

FIGS. 9A and 9B illustrate an embodiment with two workflow objects with two inter-object relations that result in overall rules;

FIGS. 10A and 10B illustrate an embodiment with workflow objects that are added or removed;

FIGS. 11A and 11B illustrate an embodiment with workflow objects that are related in hierarchy, in two equivalent versions;

FIGS. 12A and 12B illustrate an embodiment with workflow objects in hierarchy;

FIGS. 13A, 13B and 13C illustrate an embodiment in that workflow objects and relations are added or removed;

FIG. 14 illustrates an embodiment with workflow objects that are taken from a template library;

FIG. 15 illustrates an embodiment in that the workflow objects are combinations in different layers; and

FIG. 16 illustrates an embodiment with a workflow that includes a tree with workflow objects.

The figures are non-scaled drawings. The sizes of pictograms are only symbolically and should not be mistaken to be aligned with each other.

### Detailed Description

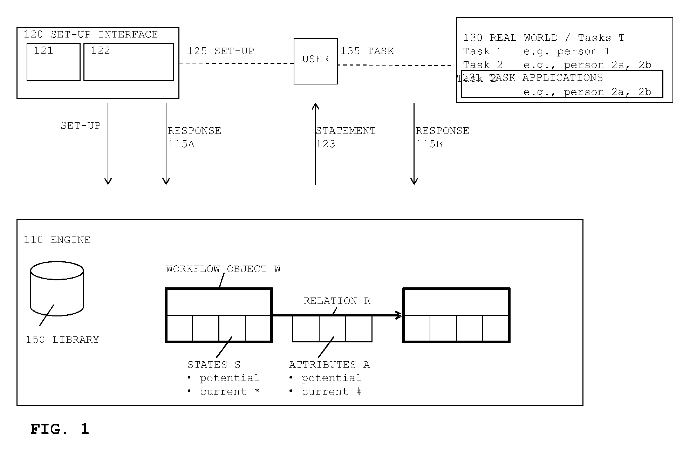

FIG. 1 illustrates a block diagram of workflow engine 110 with workflow objects W ("objects" in short, rectangle symbols), in combination with user interface 120 and with the real world 130. For convenience of explanation, user 125/135 is differentiated by roles into set-up role 125 and task role 135. FIG. 1 also serves to introduce writing conventions that are used in this description.

Starting at the top of FIG. 1, tasks (T, task 1, task 2 and so on) are being performed in the real world 130, by entities such as persons (persons 1, 2a, 2b, or performed by machines etc.). Taking a service department in a business organization as an example, in general there are tasks such as receiving a question from a customer (task 1) and returning the answer to the question (task 2). The tasks 1, 2 are assigned to one or more persons, for example to a call center operator (person 1) and to a service specialist (person 2a).

At a first severity level, task 1 has to be completed before task 2 can be performed. In the example, the question has to be received before the question can be answered. In other words, there is no answer without question, or the answer needs a question. To reflect such inter-task dependency, the description differentiates into a source task (task 1) and a target task (task 2). The target task requires the source task to be completed. In other words, the target task needs the source task.

However, real world 130 can have tasks that are independent from other tasks. In the example, task 0 could be the publication of a service manual. For example, such a manual explains organizational details to customers of the organization. As a consequence, the number of particular questions and particular answers is expected to drop. Task 0 could start at any time. Or course, content that is collected during performance of task 1, 2 (frequently answered questions, FAQ) could be used.

At a second severity level, task 1 is performed optionally, with a low degree of dependency to other task. For example, being a customer, reading the service manual (task 1) before using a new gadget (task 2) is useful, but not required. The new gadget can be used without referring to the manual.

It should be noted that the entities that perform the tasks can be different for each task. For example, the call center operator and service specialist are different persons.

A user of engine 110 who performs a task in real world 130 has task role 135 and can operate a computer with a specialized application, or "task application 131" that is provided optionally. There is a variety of task applications available for task roles. Task applications are, for example, a review application (operated by managers), a purchasing application (operated by purchasing experts), a publishing application or web site application, a customer portal application or the like. Task applications include applications that relate to the performance of tasks irrespective of the content of the tasks.

The task applications may not be part of workflow engine 110 but can communicate with it. Such a communication includes, for example, engine 110 to trigger, allow, block or otherwise modify modules of the task application.

Moving down in FIG. 1, workflow engine 110 is a computer with memory and processor that implements a computer workflow. Engine 110 can also be implemented as part of a computer, for example, as a computer application, or as a module in an application, or even inside a task application. The computer can be implemented by a combination of computers. Engine 110 and application can be implemented on computers that are located remote to each other. For example, engine 110 could be provided in a Software-as-a-Service (SaaS) scenario on a hosted computer.

Workflow objects W in engine 110 represent the tasks in real world 130. In the example, the objects represent task 1 (e.g., receiving the question from the particular customer) and task 2 (e.g., responding to the particular customer). The workflow objects have states (S) that are potential states and current states (*).

Engine 110 has user interface 120 for user 125/135 who can be a manager and/or a knowledge worker. User interface 120 could be implemented as a graphical user interface (GUI). For example, user 125/135 can drag and drop symbols from a symbol pane 121 into a working pane 122. The symbols can be similar to the symbols here in the description and the figures. The interaction with user 125 causes engine 110 to set-up the logics and to modify workflow objects. User interface 120 could be part of the user interface of the task application, so that the user - while interacting with the task application - set up the logic or modifies it.

For example, for a new task to be performed, user 125 drags a corresponding symbol (e.g., a rectangle from 121 to 122) so that engine 110 obtains a new workflow object. The new workflow object represents the new task. User 125 can then relate the new workflow object to other workflow objects, by using the symbols that corresponds to a relation between objects. There are many other options for a person of skill in the art to implement a GUI, such as providing buttons ("new object") or other UI elements.

Engine 110 presents statement 123 to user 125/135. The statement can be composed from pre-defined text-portions that are arranged depending on the current attribute.

It is often desired to modify the performance of a task. In the example, the performance of task 2 could be assigned from person 2a to person 2b, for a variety of reasons: non-availability of person 2a, different skill set due to changing question etc. The representing computer workflow has to modify the objects. Engine 110 accomplishes this by using inter-object relations ("relations R" in short, arrow symbols) as input to calculate relation attributes (squares below the arrows). The relation attributes A can be potential attributes and current attributes (#).

Although illustrated by symbols, workflow objects, states, relations, attributes, severity levels etc. are implemented as data structures in memory. The computer processor executes method steps in that the processor accesses theses data structures.

Having introduced real world 130, user interface 120 and engine 110, the description now continues with an overview to the operation.

User 125 interacts with engine 110 (through user interface 120, e.g., drag/drop) to define potential relation attributes depending on potential workflow states. In other words, user 125 provides the logics. In providing the logics, the user can access template library 150 that is provided optionally. Library 150 can be part of engine 110 or can be coupled to engine 110.

Engine 110 assigns states to the workflow objects, from set of from the potential states. It is also possible that the user assigns the states to the workflow objects. Engine 110 processes the states (S) and the attributes (A) to provide statement 123 to the user 122/135. With statement 123 it becomes possible to modify the states of the workflow objects. User 125/135 can return response 115A, 115B to engine 110 to actually modify the states.

Some of the figures are also time diagrams that illustrate the objects and relations at different points in time t1, t2 and so on with the time progress illustrated in top-down direction. Some of the figures are accompanied by state tables. The symbols in the illustration of the figures are rectangles, arrows and squares with acronyms.

FIG. 1 and some of the other figures look similar to sequence flows written in graphical formats such as Business Process Model and Notation (BPMN). But there are differences, such as that the workflow objects W do not have to be modeled in advance.

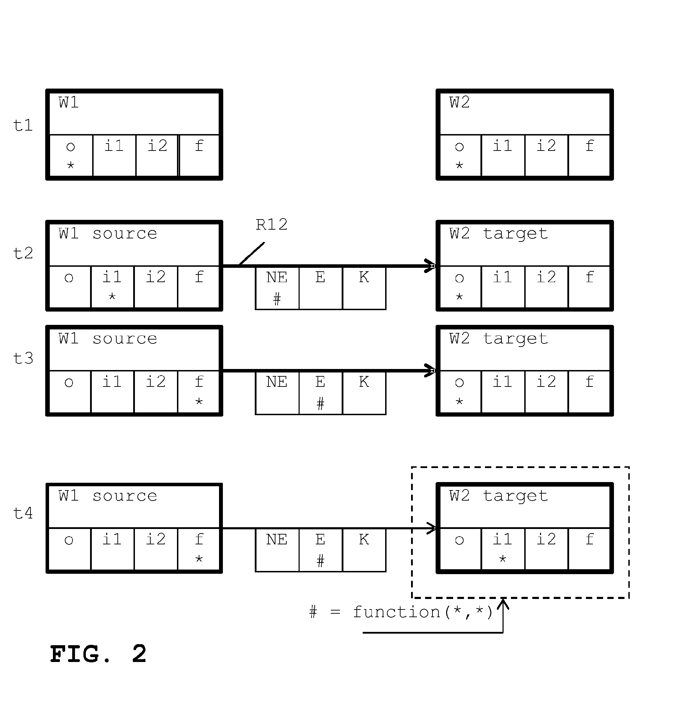

FIG. 2 illustrates an overview to workflow objects and illustrates relations between the workflow objects. The symbols (like rectangles, arrow etc.) used in the figures can be similar to the symbols in the user interface.

Large rectangles illustrate workflow objects W. The workflow objects form a plurality of workflow objects, and individual workflow objects can be distinguished by numeric indices as W1 (for "a first object"), W2 for ("a second object") and so on.

Arrows that go between the rectangles illustrate relations R. The relations R can have indices that correspond to indices of the workflow objects. For example relation R12 indicates a relation between workflow object W1 and workflow object W2. For a particular relation, one workflow object can be designated as a "source", and an-other workflow object can be designated as a "target". It is also possible to establish cross-relations between objects, with for example W1 being source and W2 being target for a first relation (as illustrated), and W2 being source and W1 being target for a second relation.

Small squares below or inside the rectangles illustrate states that the workflow objects can reach. Such workflow states are referred to as "potential states". A workflow object has at least a first state and a second state. The number of potential states is usually predefined and limited. Implementations are possible in that this number is modified during run-time.

The asterisk symbol * inside a small square indicates a "current state" that means a state at the particular point in time. Some of the examples will be explained with two or more potential states, wherein potential and current states are indicated by lower-case acronyms. For example, object W1 illustrated by the large rectangle at the left upper corner of FIG. 2 has 4 potential states "o", "i1", "i2", and "f" (small squares), but at a given time (t1 in the example), WA has the current state "o" (asterisk).

Small squares without acronyms indicate that further potential states could be used, but that in the example of the figure, such potential state is not used.

In the examples, the description uses the (lower-case) acronyms for states as follows: The acronym "o" is the synonym for OPEN (or INIT), a state in that the task (represented by the workflow object) does not yet show any activity. The acronym "o" can also indicate that the workflow object has just been initialized. The acronym "i" stands for an intermediate state, or the acronym "i1" stands for a first intermediate state, the acronym" i2" stands for a second intermediate state, and so on. During intermediate states, the task (represented by the workflow) is not yet completed. The acronym "f" stands for FINISHED, for example, in the sense that the task (represented by the workflow object) has been finalized. The acronym "b" stands for STARTED. This state is a binary state with "nb" standing for the opposite NOT STARTED. The acronym "a" stands for "approved", in the sense that the entity (e.g., person) that should perform the task has approved to perform the task, or has approved to perform a different task. The acronym "r" stands for "rejected", in the sense that the entity (e.g., person) that should perform the task has rejected to perform the task, or has rejected to perform a different task. In the example of the figures, "approved" and "rejected" are final states of a workflow object, indicating that the represented task has been completed.

Small squares below the arrows illustrate attributes that the relations can have. Such attributes are referred to as "potential attributes". A relation has at least a first attribute and a second attribute. The hash symbol # inside a small square indicates a "current attribute" that means an attribute at a particular point in time. Attributes are illustrated by upper-case acronyms.

For example, relation R12 illustrated between objects W1 and W2 in FIG. 2 has 3 potential attributes "NE", "E", and "K" (small squares), but at a given time (t3 in the example), R12 has the current attribute "E" (#). As mentioned, engine 110 calculates the current attribute and derives statement 123. The description uses the upper-case attributes with the following semantic: The acronym "E" stands for "fulfilled", in the sense that the task that is represented by the target workflow object is allowed to be performed. In other words, using the graphical notation of the present description, the conditions for performing the task of the workflow object at the end of the arrow are in compliance. This attribute has an attribute with "NE" standing for the opposite ("not enabled"). The acronym "K" stands for a conflict that - depending on the embodiment - can optionally mean: violation of a task dependency. The statement is derived from the current attribute, for example, from a look-up table with text that the user provides.

The embodiment described herein uses a "trias" of "E", "NE" and "K", but the number of potential attributes could be different. Also, the semantics of the attributes can be different in other implementations.

In general, relations can be considered between workflow objects, such as relation R12 between object W1 and W2 in FIG. 2 (inter-object relation).

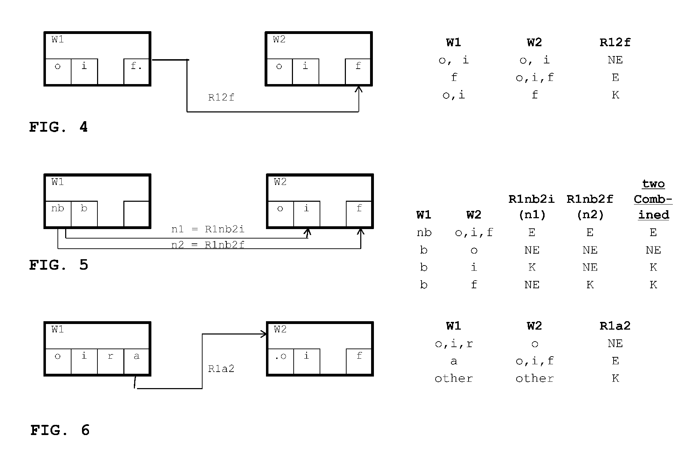

More in particular, the relations can also be established as relations between potential states. Such inter-state relations are specialized inter-object relations. An example is given in FIG. 5. The arrow starts from a small square (potential state of source object) and ends at a small square (potential state of target object). For example, in FIG. 5, there is a relation between state "nb" of object W1 and state "f" of object W2 that can also be noted as R1nb2f. In the same notation, the relation between state "b" of object W1 and state "i" of object W2 can be noted as R1b2i.

Further, the relations can also be established as hybrid relations, between states and objects (in both directions). For example, FIG. 6 illustrates relation R1a2 from potential state "a" of workflow object W1 to workflow object W2.

Some figures can include state/attribute tables (or "state tables" in short). In the tables, the column headers indicate the workflow object and the relations. In other words, the state tables have columns for the states and at least a column for the relation that is calculated. The relation column is usually the column on the right. For example, in FIG. 4, the columns are W1 and W2 for the workflow object and R12f for the relation between workflow object W1 and state "f" of workflow object W2.

In order to simplify the illustration and to avoid long tables, a comma "," between the acronyms indicates that either acronym is valid. For example, in FIG. 4, "o, i" stands for either "o" or "i".

Most of the relations define conditions for execution of the target object, wherein the conditions are calculated (by the engine) from the state (of the source object) and the attributes of the relations. In other words, the target object needs certain data structures to be executed by the processor. Therefore, the relations are also referred to as "needs relations".

Symbols (rectangles, arrows etc.) and tables can be interchanged. The symbols are user-friendly representations of workflow items, relations, states and attributes etc. and the tables are data structures in memory. That the engine can derive the corresponding data structure according to the conventions of the symbols (syntax, semantics).

The description now continues with general details regarding the interaction between the objects.

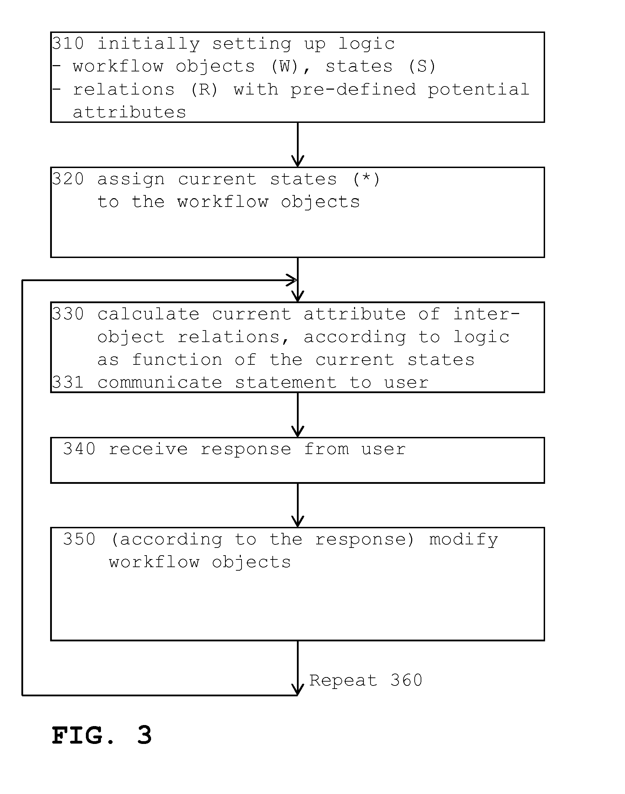

FIG. 3 illustrates a flow chart diagram of computer-implemented method 300 that is a method to operate computer engine 110.

In a setting up 310 step, a logic (W/S, R/A) is set up in the engine. The logic has workflow objects (W) that represents tasks (T) to be performed outside the engine (110), potential states (S) for the workflow objects (W), and inter-object relations (R) between the workflow objects (W) with pre-defined potential attributes (A) (cf. FIG. 1). The logic can be set up, for example, as described in interaction with the user.

In an assigning step 320, current states (*) are assigned to the workflow objects (W) according to the performance of the tasks (T).

In a calculating step 330, the engine calculates current attributes (#) of the inter-object relations (R), according to the logic (W/S, R/A) as a function of the current states (*) of the workflow objects (W). In a communicating step 331, the engine communicates statement 123 to the user.

In a receiving step 340, the engine receives a response from the user in response to statement 123.

In a modifying step, 350 the engine modifies the workflow objects (W) according to the response.

Looking at embodiments, the modifying step 350 can comprise to modify the current states (*) of the workflow objects (W). The modifying step 350 can comprise to change the logic (W/S, R/A). There are several options, such as adding or removing inter-object relations (R), adding or removing workflow objects (W), adding or removing potential states (S) of the workflow objects.

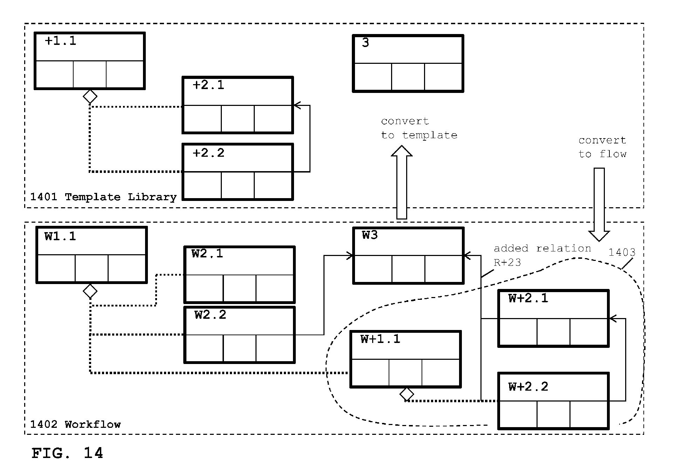

Optionally, modifying 350 can comprise accessing a template library (cf. 1401 in FIG. 14) to convert template elements to workflow objects (W) and to convert template relations to inter-object relations (R). It is also possible to convert workflow objects (W) to template elements, to convert inter-object relations (R) to template relations, to convert potential states of the workflow objects to potential states of the templates, and to store the template elements and the template relations in the template library. Details will be explained in connection with FIG. 14.

In the setting up step 310, the engine can use pre-defined potential attributes (A) that include a first attribute (E) of a target task to be performed (i.e., precondition is fulfilled), a second attribute (NE) of the target task not to be performed (i.e., preconditions is not fulfilled), and a third attribute for a conflict (K) (if the task would be performed despite non-fulfillment). The inter-object relation for that potential attribute (A) is directed to a target workflow object (W2) that represents the target task.

As explained with details to FIG. 1, setting up 310 can comprise to interact with the user (125) through graphical user interface 120 (or other interface) and to convert graphical information to the logic (W/S, R/A) by applying pre-defined conventions (rectangles etc.).

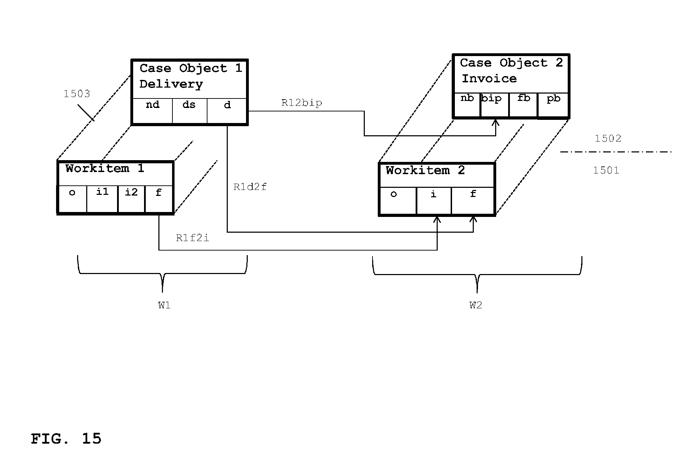

Optionally, assigning 320 the current states (*) to the workflow objects (W) can be accomplished by receiving data from task application 135. With details explained in connection with FIG. 15, the workflow objects (W) can be paired objects with a first layer (cf. 1501) communicating with the user (135) of the engine (110) and a second layer (1502) communicating with the task application (135) that performs the tasks (T). A mapping is provided between the first layer (1501) and the second layer (1502) so that assigning (320) the current states (*) to the workflow objects (W) depends on the performance of the tasks (T).

In repetitions 360, the steps of calculating 330 current attributes, communicating 331 the statement to the user, receiving 340 a response and modifying 350 the workflow objects (W) are repeated.

Severity levels are applied optionally. In the setting up step 310, a severity level can be received to let the engine operate at either a first level or a second level, and wherein in modifying 350, the first level limits modifications to modifications that keep the current attribute (#) to be fulfilled (E) and not fulfilled (NE), wherein the second level enables the current attribute (#) to be set to conflict (K).

Receiving 340 the response from the user (115A, 115B) or modifying 350 the workflow objects (W) can depend on role-based authorizations of the user 125/135. The role-based authorizations of the user 125/135 can distinguish the engine 110 to interact with the user in the set-up role 125 for modifications of the logic (W/S, R/A) and to interact with the user in the task role 135 for modifications of the current states (*) of the workflow objects (W). Looking at the roles, in setting up 310, the engine usually interacts with the user, in assigning 320 current states, the engine interacts with the task application (to receive data relating to the tasks), or interacts with the user; for calculating 330, a user-interaction is not required. In communicating 331 the statement, the engine can selectively send different statements to different roles. In receiving 340 the response, the engine can differentiate between the roles, so that potential responses can be predefined according to authorizations.

FIGS. 4-6 illustrate examples for first and second workflow objects, with states that can be extreme states with respect to the workflow objects. Extreme states can be an initial state or a final state. The identification of a final state of a source workflow object, and of an initial state of a target workflow object can be required for engine 110 for calculation. In the figures, an initial state is indicated by a dot left to the acronym (e.g., ".o") and a final state is indicated by a dot right to the acronym (e.g., "f."). Looking at the symbols, an arrow (for a relation) that starts at the right edge of a rectangle (e.g., R12f from W1) would not identify which of the states (in the source) is the final state. Or, an arrow (for a relation) that goes into the left edge of a rectangle (e.g., R1a2 to W2) would not identify which of the states (in the target) is the initial state. The user would need to identify the final state (or state) and the initial state (or states).

However, for arrows that start at a state and that end at a state (e.g., R1b2i, R1nb2f in FIG. 5), such a final/initial identification is not required.

FIG. 4 illustrates an example with the first workflow object W1 and the second workflow object W2, with a single inter-object relation. Both objects have potential states "o" (open), "i" (intermediate) and "f" (finished). The final state of W1 is "f", the indication of an initial state of W2 is not required because the relation R12f ends in state "f" (of W2). For example, W1 stands for the task to book a hotel, and W2 stands for the task to book a flight. Both tasks can be performed simultaneously, but under the following conditions: Booking the flight should only be finalized when the hotel has been booked. The knowledge worker (set-up role) has arranged the arrow such that the following relation is established: Attribute "NE" for W1 being "o" or "i and W2 being "o" or "i"; attribute "E" for W1 at "f" and W2 at either "o", "i" or "f"; attribute "K" for W1 "o" or "i" and W2 at "f". The user has also provided the statements as follows: "You can finalize booking the flight" for "E"; "You should not book the flight unless the hotel is booked" for "NE", and "There is a conflict: the hotel is not yet booked but the flight is booked" for "K". The statement is addressed to the user who performs the flight booking task (i.e., the target task).

FIG. 5 illustrates an example scenario with two workflow objects W1 and W2 and two relations that are further combined. Both relations lead to current attributes "E", "NE" or "K". The relations are inter-state relations (so that indicating final states for W1 and initial states for W2 is not required.) The current attributes of both relations are further combined by rules to an overall result (column on the right). Such "relation rules" could be set-up by the user, for example, as follows: For two attributes "E" the overall attribute is an "E" as well. For attributes "E"/"NE" in either order, the overall attribute must be "NE". A conflict "K" has a higher priority so that the overall attribute results in "K". The rules are just example rules and persons of skill in the art can use other rules, for other embodiment/implementations. Combined Rules can be implemented into the engine so that the set-up user does not have to set them up.

The relation rules can consider a variety of further factors. For example, the relations in FIG. 5 have the origin in the same state "nb" of W1, in that sense the relations share the same source.

FIG. 6 illustrates an embodiment with two workflow objects W1 and W2 and a single inter-object relation R1a2 between them. Workflow object W1 represents a review task by a first user ("review user"), and workflow object W2 represents a purchasing task by a second user ("purchasing user"). W1 has the potential states "o", "i", "r" and "a"; and W2 has the potential states "o", "i" and "f". The relation R1a2 is a hybrid relation from a state (i.e., "a") to a workflow object (i.e., "o" indicated to be the initial state). In other words, the source is a state of a workflow object and the target is a workflow object. This is different from the example of FIG. 4 with a workflow object as the source and a state as a target.

As mentioned above, the first severity level ("required") requires the users to perform task 1 prior to task 2. According to the relation R1a2, a current attribute "E" the second workflow object W2 allow task performance of task 2. In view of the statement, the "E" would lead to an indication that the user can perform task 2.

The workflow engine (110 in FIG. 1) with the workflow objects could communicate with the task applications, such as a review application and a purchasing application (cf. task application 131, not illustrated here).

Assuming a budget constraint, the organization has to introduce a review for all purchasing activities. In the approach according to the invention, the user sets up the logics (NE, E, K) for existing workflow objects W1 and W2 by graphically relating the rectangle symbols (for the workflow objects) with the arrow (for the relation). The engine evaluates this graphical set-up to a data structure, such as a structure given in the table. In other words, the user uses a graphical syntax that the engine uses to provide the data structure. The examples used by the writing conventions of the description are illustrative only so that the person of skill in the art can use other syntax conventions.

Performing the purchasing task requires ("needs") approval. Looking at the first workflow object W1 (for the review task), it can have the following states: "o" for the reviewer not having started the review task, but for the workflow object being available to the manager; "i" intermediate for the manager having started the perform the review task, for example, the workflow object W1 presenting details or documents; "r" for the reviewer making a rejection decision; and "a" for the reviewer making an approval decision. When a decision is reached, the review task is completed, hence the workflow object W1 reaches "r" or "a".

Looking at the second workflow object W2 (for the purchasing task), it can have the following states: "o" for the purchaser not yet have started the task (being the initial state); "i" intermediate for the purchaser interacting with a purchasing application to choose a supplier or to choose a delivery address; and "f" for finished. Knowing the potential states, the knowledge worker (set-up role) has related both workflow objects by a relation R1a2, indicated by an arrow from W1 in state "a" to W2 (non state specific). In other words, with this simple considerations and simple graphical interactions on user interface 120 (e.g., drag and drop), the user has provided conditions (or logics), and the engine put the condition into data structures, such as tables.

When a first particular item should be purchased for the organization, such as a railway ticket for a particular trip, the workflow engine assigns the states to both workflow objects (depending on the task performance), but lets the purchaser user (in the purchasing application) perform the purchasing task (at W2) only in case of "a" from W1. This can be accomplished by the statement indicating phrases such as "purchase possible" for attribute "E" or "purchase not possible" (or "it is recommended not to buy unless ...") for attribute "NE". Later, when second particular item should be purchased for the organization, such as a new travel suitcase, the workflow engine assigns the states to the objects again, this time for the suitcase task, but - in absence of an approval - does not let the purchaser user perform the task. Optionally, the engine uses further workflow objects W3 and W4 that represent those additional tasks. Or, the statement 123 indicates that the approval is not yet available, and the user can override this statement by simply buying the suitcase. In that case, the state of W2 would change to "f" finished (the suitcase has been bough indeed) and the recalculation of the # relation would lead to a "K" attribute.

It should be noted that the arrow R1a2 is not considered to be a trigger for the second task. The purchaser can perform the purchasing task (with W2) at any time, with the only condition to have the attribute "E" resulting in the relation to the workflow object W2 (and hence the task). This approach provides flexibility which is more and more desired in modern organizations.

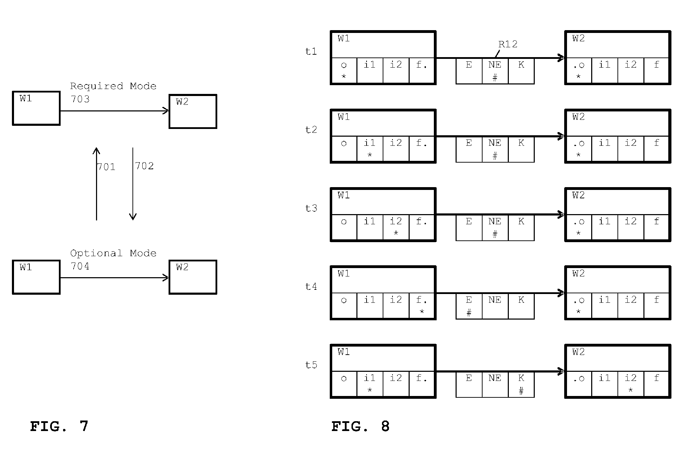

FIG. 7 illustrates an embodiment with severity levels. The severity level is linked to the mentioned state modifications and structural modifications and to the current attribute (#) that is obtained in the repetition. FIG. 7 illustrates workflow objects W1 and W2 (source and target) for both levels 703 and 704, an inter-object relation R12 and level change conditions 701, 702. At the required level 703, the modifications are limited to modifications that keep the current attribute (#) to be fulfilled (E) or not fulfilled (NE). In other words, changing the attribute from "E" or to "NE" to "K" is not possible. In the optional level 704, the modifications can include the attribute that indicates a conflict (K). The attribute can be "E", "NE" or "K".

Changing the level can be accomplished by user interaction, for example, if the user reads the statement (e.g., "Perform task 1 first!") and decides to overrule the suggestion of the statement (e.g., allowing not to perform task 1). But a change 702 from the required level to the optional level is only possible for the current attribute (#) being fulfilled (E) or not fulfilled (NE), and a change 701 from the optional level to the required level is not possible if the current attribute (#) is at conflict (K). The severity level can influence the statement, by selectively providing the statement with different pre-defined terms, such as "the previous task must be completed" for the required level, or "the previous task should be completed" for the optional level. Depending on the level, the statement may be different: For example, in the optional level, the engine uses pre-defined text portions that use "should" or similar language, wherein for the required level, the engine uses pre-defined text portions that use "shall" or similar language. As mentioned, the user - especially in the set-up role - can change the statement.

FIG. 8 illustrates an embodiment with two workflow objects W1 and W2 with different states and different resulting relation attributes. Both objects have potential states "o", "i1", "i2", and "f". The extreme states are as follows: The final state of W1 is "f" and the initial state of W2 is "o". The relation R12 between the objects results in the attribute "E" - here illustrated at t4 - if W1 is in the final state (i.e., "f"); results in "NE" if W1 is not in the final state (i.e., "o", "i1", or "i2") and W2 is in the initial state (i.e., "o") - here illustrated for t1, t2 and t3. Other state combinations result in the attribute "K" (conflict), at t5 for example.

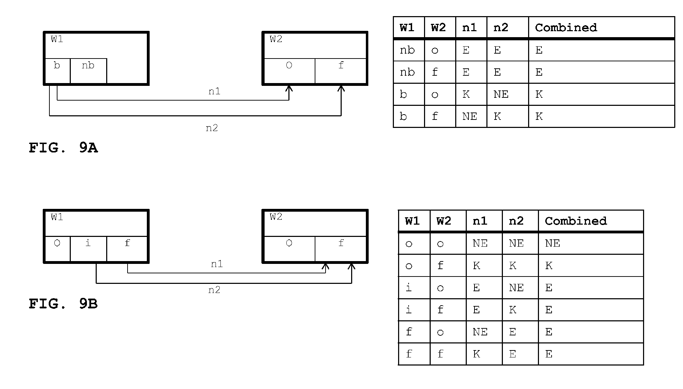

FIGS. 9A and 9B illustrate an embodiment with two workflow objects W1 and W2 with two relations that result in overall rules. The relations are relations between states.

As in FIG. 9A, W1 has the potential states "nb" and "b", and W2 has the potential states "o" and "f". The relations R1nb2o and R1nb2f have the same source state "nb". Relations with the same source state can have a combined rule (meta rule) that leads to "E" in a logical AND relation, but leads to "K" if any of the relations leads to "K" (logical OR).

As in FIG. 9B, W1 has the potential states "o", "i" and "f" and W2 has the potential states "o" and "f". There are again two relations between states. In difference to the example of FIG. 5, the relation target the same state "f" in W2 and the relation rules are set-up differently: the priority is with "E" (and not with "K"). For W1 being at "i" or being at "f" the attribute is "E".

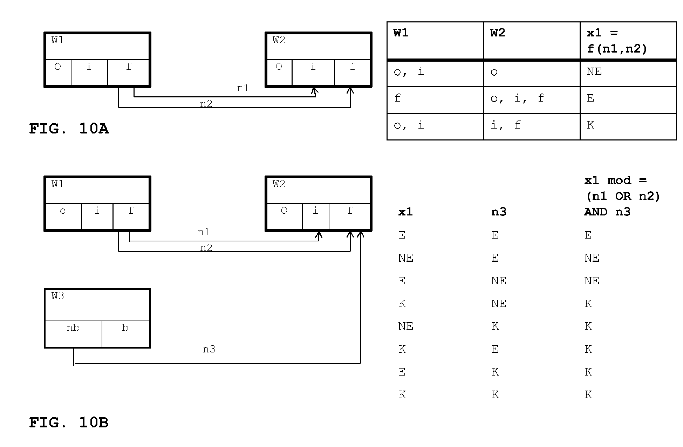

FIGS. 10A and 10B illustrate an embodiment with workflow objects that are added or removed. As mentioned the modifications can be implemented by adding (or by removing) workflow objects. In the example of FIG. 10A, there are two workflow objects W1 and W2 with two relations R1f2i ("n1" in short) and R1f2f ("n2"). The relation R (n1, n2) = x1 results in attributes given in the table. The statement can be derived accordingly. In the example of FIG. 10B, the user - in response to the statement - modifies the workflow structure by adding workflow object W3. As a relation rule, the attributes can be AND-related as illustrated in the example. As a result, a running process with tasks 1 and 2 that are being performed (with representing workflow objects W1, W2) can be modified by adding a new task (and a representing workflow object W3). Looking from FIG. 10B to 10A, the removal approach applies. Workflow object W3 would be removed because a task does not have to be performed any longer.

In classical workflows adding or removing objects and object interdependencies requires to modify the existing objects or relations. The embodiment allows expanding a workflow without substantially modifying it. For example, a first organization X (or any group of persons who perform tasks) sets up a first workflow (e.g., with W1 and W2) and uses it. At a later point in time, a second organization Y (that cooperates with X) adds a portion to the workflow (e.g., W3). There is no need to modify the existing workflow W1/W2. Both organizations X and Y can maintain the workflows (e.g., W1/W2 and W3) independently and with minimal influence to the workflow of the cooperating organizations.

The embodiment also allows independent additivity. For example, organization X defines a workflow (e.g., W1/W2), but organization Y and Z add portions to the original workflow without the need to consider the workflow that are contributed by the others. In other words, it is possible that Y and Z are ignorant to each other as organizations, and that Y and Z do not share knowledge regarding the workflows. Such a scenario frequently appears in competitive environments. The resulting overall workflow (i.e., W1/W2 of X with W3 of Y, W4 of Z) operates nevertheless. There are only a few interdependencies (cf. relation n3 from W3 to W2) to be set up.

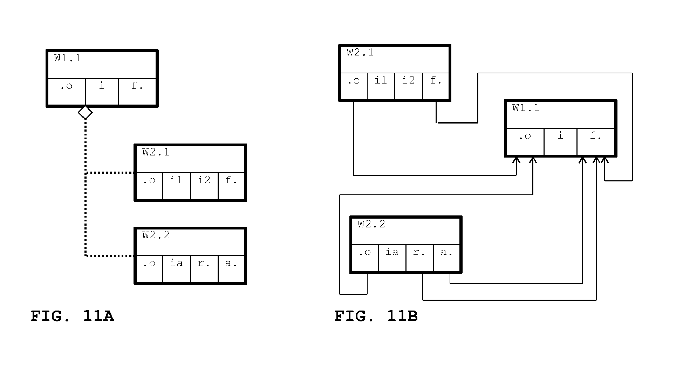

FIGS. 11A and 11B illustrate an embodiment with workflow objects W1.1, W2.1, and W2.2. that are related in hierarchy, in two equivalent versions. The diamond symbol and dotted lines indicate hierarchy. While the version in FIG. 11A is more convenient for the user (who indicates that W2.1 and W2.2 are sub-ordinated to W1), the version in FIG. 11B with the relations (plain arrows) is a version that the engine can automatically derive from the original version in FIG. 11A. In that respect, the workflow according to FIG. 11A is available prior to the workflow according to FIG. 11B. In the workflow objects, state "o" is an initial state, and states "a", "r" and "f" are final states.

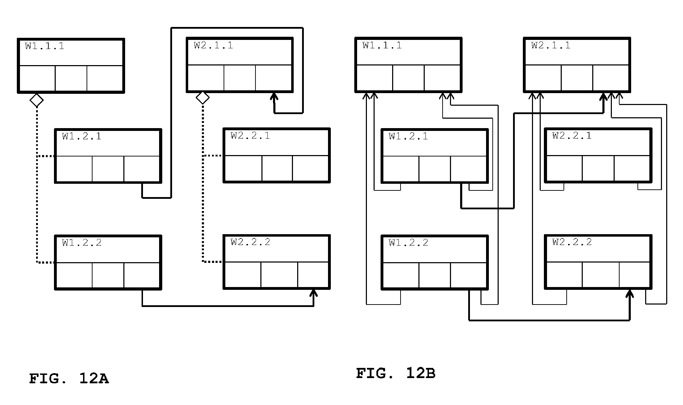

FIGS. 12A and 12B illustrate an embodiment with workflow objects in hierarchy with W1.1.1 (e.g., task to found a company) and W2.1.1 (e.g., task to provide a website of this company) being first level objects. Dependent workflow objects are W1.2.1 (e.g., task to write a business plan for the company), W1.2.2. (e.g., task to register the company with the tax office), W2.2.1 (e.g., to write content for the website) and W2.2.2 (e.g., to add legal information to the website). The versions in FIGS. 12A and 12B are equivalent, wherein the version of FIG. 12B is provided automatically by the engine once the user has provided the hierarchical dependencies. The version according to FIG. 12A is available prior to the workflow version according to FIG. 12B. The workflow objects have states such as "i", "o" and "f" (from left to right below the rectangles). As indicated by bold arrows, there are relations across the hierarchy trees. For example, there is no website without a business plan, and adding legal information such as tax identification is only possible after the company is officially registered.

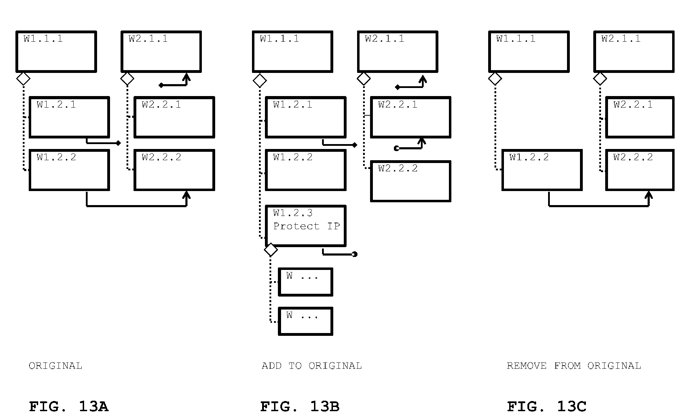

FIGS. 13A and 13B illustrate an embodiment in that workflow objects and relations are added. FIG. 13A is simplified (ORIGINAL) and corresponds to FIG. 12A. To stay with the example of FIG. 12, a new task (e.g., "protecting Intellectual Property") with workflow object W1.2.3 (and optionally sub-ordinated object) is added (ADD TO ORIGINAL).

FIGS. 13A and 13C illustrate a scenario in that workflow objects and relations are removed, as in the example, removed from the original of FIG. 13A. Workflow objects (or combinations, trees of objects) can be added or removed (or deleted, or made inactive, for example, via set-up interface 120) while the engine is running. In the repetition, the current attribute is recalculated and the statement is refreshed accordingly.

FIG. 14 illustrates a scenario with workflow objects that are taken from a template library (cf. library 150 in FIG. 1). As mentioned above, the user can modify the workflow objects, by structural modifications with (inter-object relations, hierarchies), or by adding or by removing workflow objects. In this example, template library 1401 is provided with template elements +1.1, +2.1, and +2.2 that can potentially serve as workflow objects. Template elements +2.1 and +2.2 are subordinated under +1.1 to form a tree. Relations between template elements are template relations. Representations of the elements and relations can be provided in the user interface (cf. interface 120 with symbol pane 121 in FIG. 1). In the example, the symbols are rectangles and arrows. The set up user can move the symbols into the working pane 122 to assemble workflow 1402 (same rectangle and arrow symbols used). As a consequence, the engine converts template elements into workflow objects, and - if available - converts template relations into workflow relations. In the example, workflow 1402 has workflow object W1.1 (with sub-ordinated objects W2.1 and W2.2), workflow object W3 as well as group 1403 of workflow objects W+1.1, W+2.1, W+2.2. The "+" indicates that the objects in group 1403 have been derived from the template by adding them to the workflow (convert to flow). Also, the user can add relations, such as relation R23 from object W+2.1 to object W3.

It is also possible to convert workflow objects to templates so that the library can be enhanced. This is illustrated by the example of workflow object W3 that has been converted to template element 3. Conversion to templates is also possible for workflow relations.

Conversion in both directions (to workflow, to template) is not limited to single elements such as template elements/relations or workflow objects/relations. It is also possible to convert elements or objects that are available in combinations. Such combinations are, for example, trees with template elements (including inter-element relations, tree +1.1, +2.1, +2.2) or workflows (complete, or partial).

FIG. 15 illustrates an embodiment in that the workflow objects are combinations in different layers. As mentioned above in the description of FIG. 1, the engine optionally interacts with task applications (cf. application 135 in FIG. 1). The engine assigns the current states (*) to the workflow objects by receiving data from a task application. The task applications might use conventions that are different from the conventions of the engine as described. To accommodate such situations, the workflow objects are combinations of a workflow items and case objects.

The workflow item layer (1501) uses symbols that are presented to the user, and the case object layer (1502) communicates with the task application, but not necessarily through user interface symbols. The combined workflow objects have a mapping 1503 between the two layers 1501 and 1502. For example, the workflow object W1 represent a delivery task and has workflow item 1 (in layer 1501, potential states "o", "i1", "i2", "f") mapped to case object 1 (in layer 1502, potential states "nd" not delivered, "ds" delivery in progress, "d" delivered). In other words, a workflow object is a pair of a work item and of a case object. For example, the workflow object W2 represents an invoicing task with work item 2 ("o", "i", "f") and case object 2 ("nb", "bip", "fb", "pb"). Relations can be established within layers (e.g., relation R1f2i in the work item layer, or relation R12bip in the case object layer) and across layers (e.g., R1d2f from case object 1 to work item 2).

Paired workflow objects (i.e., object with layers) can also be converted to and from libraries, wherein templates can be limited to one of the layers. Paired workflow objects can be treated liked normal (unpaired) workflow objects, with structural and other modifications available to the user (e.g., adding/removing trees, adding/removing objects and the like).

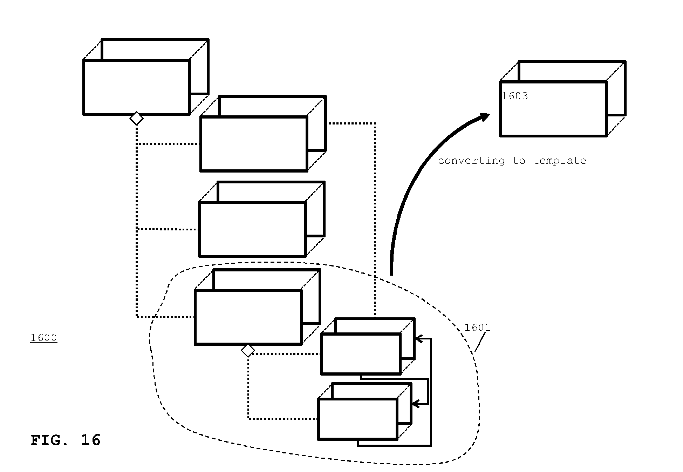

FIG. 16 illustrates an embodiment with workflow 1600 that includes tree 1601 with workflow objects. In the example of FIG. 16, the workflow objects are paired objects, but non-paired objects can also be used. Tree 1601 is converted to template element 1603 that appears to the user as a single template element. This can include the option for the user to expand the tree to modify sub-elements. But having the tree combined to a single template element hides complexity from the user.

Various other modifications are possible to those of skill in the art. The engine can be implemented on a computer that is remote to the interface. For example, the engine can be "software as a service".

The states of the workflow objects and the attributes of the relations can be used to track the overall performance of the organization, to track performance of individual tasks, or to track the performance of task combinations (or projects). For example, the overall performance could be presented to users in form of burn-down diagrams or the like. It is also possible to identify the task (or the tasks) to be performed next and to identify conflicts that prevent performing a task.

Embodiments of the invention can be implemented in digital electronic circuitry, or in computer hardware, firmware, software, or in combinations of them. The invention can be implemented as a computer program product, for example, a computer program tangibly embodied in an information carrier, for example, in a machine-readable storage device, for execution by, or to control the operation of, data processing apparatus, for example, a programmable processor, a computer, or multiple computers. A computer program as claimed can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network. The described methods can all be executed by corresponding computer products on the respective devices, for example, the first and second computers, the trusted computers and the communication means.

Method steps of the invention can be executed by one or more programmable processors executing a computer program to perform functions of the invention by operating on input data and generating output. Method steps can also be executed by, and apparatus of the invention can be implemented as, special purpose logic circuitry, for example, a field programmable gate array (FPGA) or an application-specific integrated circuit (ASIC).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, for example, magnetic, magneto-optical disks, optical disks or solid state disks. Such storage means may also provisioned on demand and be accessible through the Internet (e.g., Cloud Computing). Information carriers suitable for embodying computer program instructions and data include all forms of non-volatile memory, including by way of example semiconductor memory devices, for example, EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, for example, a cathode ray tube (CRT) or liquid crystal display (LCD) monitor, for displaying information to the user and an input device such as a keyboard, touchscreen or touchpad, a pointing device, for example, a mouse or a trackball, by which the user can provide input to the computer. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input.

The invention can be implemented in a computing system that includes a back-end component, for example, as a data server, or that includes a middleware component, for example, an application server, or that includes a front-end component, for example, a client computer having a graphical user interface or a Web browser through which a user can interact with an implementation of the invention, or any combination of such back-end, middleware, or front-end components. Client computers can also be mobile devices, such as smartphones, tablet PCs or any other handheld or wearable computing device. The components of the system can be interconnected by any form or medium of digital data communication, for example, a communication network. Examples of communication networks include a local area network (LAN) and a wide area network (WAN), for example, the Internet or wireless LAN or telecommunication networks.

The computing system can include clients and servers. A client and a server are generally remote from each other and typically interact through a communication network. The relationship of client and server arises by virtue of computer programs running on the respective computers and having a client-server relationship to each other.

## Claims

1. A computer-implemented method (300) for operating a computer engine (110), the method (300) comprising:
setting up (310) a logic (W/S, R/A), the logic having workflow objects (W) that represent
tasks (T) to be performed outside the engine (110), potential states (S) for the workflow objects (W), and inter-object relations (R) between the workflow objects (W) with pre-defined potential attributes (A);
assigning (320) current states (*) to the workflow objects (W) according to the
performance of the tasks (T);
calculating (330) current attributes (#) of the inter-object relations (R), according to the
logic (W/S, R/A) as a function of the current states (*) of the workflow objects (W), and communicating a statement (123) to a user (125/135);
receiving (340) a response from the user (115A, 115B) in response to the statement (123);
and
modifying (350) the workflow objects (W) according to the response (115A, 115B).

2. The method (300) of claim 1, wherein modifying (350) comprises to modify the current states (*) of the workflow objects (W).

3. The method (300) according to any of claims 1 and 2, wherein modifying (350) comprises to change the logic (W/S, R/A) by adding inter-object relations (R), by removing inter-object relations (R), by adding workflow objects (W), by removing workflow objects (W), by adding potential states (S) of the workflow objects, or by removing potential states (S) of the workflow objects.

4. The method (300) according to claim 3, wherein modifying (350) comprises accessing a template library (1401) to convert template elements to workflow objects (W) and to convert template relations to inter-object relations (R).

5. The method (300) according to claim 4, further comprising to convert workflow objects (W) to template elements, to convert inter-object relations (R) to template relations, and to store the template elements and the template relations in the template library.

6. The method (300) according to any of claims 1 to 5, wherein setting up (310) comprises to use pre-defined potential attributes (A) that include a first attribute (E) of a target task to be performed, a second attribute (NE) of the target task not to be performed, and a third attribute for a conflict (K) to perform the target task, wherein the inter-object relation for that potential attribute (A) is directed to a target workflow object (W2) that represents the target task.

7. The method (300) according to any of claims 1 to 6, wherein setting up (310) comprises to interact with the user (125) through a graphical user interface (120) and to convert graphical information to the logic (W/S, R/A) by applying pre-defined conventions.

8. The method (300) according to any of claims 1 to 7 wherein assigning (320) current states
(*) to the workflow objects (W) is performed by receiving data from a task application (135).

9. The method (300) according to claim 8, wherein the workflow objects (W) are paired objects with a first layer (1501) communicating with the user (135) of the engine (110) and a second layer (1502) communicating with the task application (135) that performs the tasks (T), wherein a mapping (1503) is provided between the first layer (1501) and the second layer (1502) so that assigning (320) the current states (*) to the workflow objects (W) depends on the performance of the tasks (T).

10. The method (300) according to any of claims 1 to 9, further comprising a repetition (360) of calculating (330) current attributes, communicating (331) the statement to the user, receiving (340) a response and modifying (350) the workflow objects (W).

11. The method (300) according to any of claims 1 to 10, wherein in setting up (310) a severity level is received to let the engine (110) operate at either a first level (703) or a second level (704), and wherein in modifying (350), the first level (703) limits modifications to modifications that keep the current attribute (#) to be fulfilled (E) and not fulfilled (NE), wherein the second level (704) enables the current attribute (#) to be set to conflict (K).

12. The method (300) according to any of claims 1 to 11 wherein receiving (340) the response from the user or modifying (350) the workflow objects (W) depends on role-based authorizations of the user (125/135).

13. The method (300) according to claim 12, wherein the role-based authorizations of the user (125/135) distinguish the engine (110) to interact with the user in a set-up (125) for modifications of the logic (W/S, R/A) and to interact with the user in a task role (135) for modifications of the current states (*) of the workflow objects (W).

14. A computer program product that - when loaded into a memory of a computer and being executed by at least one processor of the computer - performs the steps of the computer-implemented method according to any of claims 1 to 13.

15. A computer engine (110) implemented to execute the steps of the computer-implemented method according to any of claims 1 to 13.
